# EUROPÄISCHE PATENTSCHRIFT

(11) **EP 1 688 656 B1**
(45) Veröffentlichungstag und Bekanntmachung des Hinweises auf die Patenterteilung: **19.12.2012**
(21) Anmeldenummer: 05002193.0
(22) Anmeldetag: 02.02.2005
(51) Int. Cl.: F16L 37/244

(54) **Schnellmontagesystem für Schraubverbindungen**
Quick-acting connection system for threaded connections
Système rapide de connexion pour connexion filetée

(43) Veröffentlichungstag der Anmeldung: 09.08.2006
(73) Patentinhaber: Truma Gerätetechnik GmbH & Co. KG, 85640 Putzbrunn (DE)
(72) Erfinder: Piegsa, Siegfried, 85640 Putzbrunn (DE); Schütz, Thomas, 82396 Pähl (DE)
(74) Vertreter: Müller - Hoffmann & Partner

(56) Entgegenhaltungen:
- EP-A2- 1 473 806
- GB-A- 2 138 907
- US-A- 2 673 751
- US-A- 2 695 797
- US-A- 3 922 009
- US-A- 5 324 297
- US-B1- 6 406 068

## Beschreibung

Die Erfindung betrifft ein Montagesystem gemäß dem Oberbegriff von Patentanspruch 1.

Es ist bekannt, bei Freizeitfahrzeugen, wie z. B. Reisemobilen oder Wohnwagen, an Wandelementen Luftauslässe für durch eine Heizung erwärmte Luft oder durch eine Klimaanlage gekühlte Luft vorzusehen. Dafür wird in einer entsprechenden Öffnung des Wandelements ein als Luftauslassdüse dienendes Einschraubteil eingeschoben, welches auf der rückwärtigen, dem zu belüftenden Raum abgewandten Seite ein Gewinde trägt. Auf das Gewinde kann entsprechend auf der Rückseite der Wand ein Mutternteil aufgeschraubt werden. Das Mutternelement ist derart gestaltet, dass ein Belüftungsrohr oder -schlauch eingeschoben werden kann, welches(r) wiederum zu der Heizung oder dem Klimagerät führt.

Das Wandelement wird dabei zwischen Flanschen eingeklemmt, die jeweils an dem Einschraubteil und dem Mutternteil vorgesehen sind. Damit die Teile in unterschiedlichen Wandelementen mit stark variierender Dicke (Blech, dünne Holzwand, dicke Massivholzwand) montiert werden können, ist es erforderlich, dass das Gewinde an dem Einschraubteil ausreichend lang ist. Dementsprechend kann es insbesondere beim Befestigen der Teile an einer dünnen Wand sehr zeitaufwändig sein, das Mutternteil auf dem Einschraubteil festzuschrauben, weil mehrere Umdrehungen des Mutternteils erforderlich sind, bis die Flansche von Mutternteil und Einschraubteil einen Abstand erreichen, der der Dicke der Wand entspricht. Wenn viele derartige Einschraubteile zu befestigen sind, ist der Zeitaufwand bei der Montage entsprechend hoch.

Anstelle einer derartigen Schraubverbindung sind auch Schnappverbindungen zum Fixieren der Luftauslässe bekannt, die jedoch eine Anpassung an unterschiedliche Wandstärken nur begrenzt zulassen.

Aus der GB 2 138 907 A ist eine Verbindungseinrichtung bekannt, bei der zwei Elemente axial übereinander verschiebbar sind. Eines der Elemente weist ein Außengewinde und ein anderes ein Innengewinde auf, wobei die Gewinde jeweils durch Ausnehmungen derart unterbrochen sind, dass die Elemente axial übereinander verschiebbar sind.

In der US 2,695,797 wird ein Montagesystem zum Verbinden von Rohrleitungen gezeigt. Dabei weisen die zu verbindenden Teile jeweils ein Gewinde auf, wobei sich jeweilige Gewindesegmente über jeweils 90° erstrecken und nachfolgend durch Ausnehmungen voneinander getrennt sind, die sich ebenfalls über einen Winkel von 90° erstrecken. Somit können die beiden Teile bei entsprechender Winkelstellung ineinander verschoben und nachfolgend verdreht werden.

Aus der EP 1 473 806 A2 ist ein Steckvorrichtungselement mit Montagegewinde bekannt. Das Steckvorrichtungselement weist ein Außengewinde auf, das mit einem korrespondierenden Gegengewinde an einer Montageplatte zusammenwirkt. Das Gewinde weist eine Unterbrechung auf, sodass die Einbaulage des Steckvorrichtungselements nach weniger als einer Vollumdrehung erreicht wird.

Der Erfindung liegt die Aufgabe zu Grunde, ein Montagesystem zum Zusammenbauen von zwei Teilen anzugeben, bei denen die Montagezeit reduziert werden kann.

Die Aufgabe wird erfindungsgemäß durch ein Montagesystem gemäß Patentanspruch 1 gelöst. Vorteilhafte Weiterentwicklungen der Erfindung sind in den abhängigen Ansprüchen definiert.

Bei einem erfindungsgemäßen Montagesystem ist ein erstes Teil mit einem ersten Gewinde und ein zweites Teil mit einem zu dem ersten Gewinde passenden zweiten Gewinde vorgesehen, wobei das erste und das zweite Gewinde miteinander in Eingriff bringbar sind. In dem ersten Gewinde und in dem zweiten Gewinde sind mehrere, insbesondere jeweils wenigstens zwei axial verlaufende Ausnehmungen ausgebildet, die die zugehörigen Gewindegänge unterbrechen und das erste Gewinde bzw. das zweite Gewinde jeweils in mehrere in Umfangsrichtung beabstandete Gewindesegmente unterteilen. Die Ausnehmungen und die Gewindesegmente sind derart bemessen und angeordnet, dass das erste und das zweite Teil und somit das erste und das zweite Gewinde axial ineinander zusammenschiebbar sind, ohne dass die Gewinde in Eingriff zueinander gelangen, wobei die Gewindesegmente des ersten Gewindes in die Ausnehmungen des zweiten Gewindes und die Gewindesegmente des zweiten Gewindes in die Ausnehmungen des ersten Gewindes schiebbar sind. Nach dem Zusammenschieben sind das erste und das zweite Teil relativ zueinander verdrehbar, so dass die Gewinde miteinander in Eingriff gelangen.

Bei dem erfindungsgemäßen Montagesystem weisen somit die beiden miteinander zu montierenden Teile jeweils ein segmentiertes Gewinde, also ein aus mehreren Gewindesegmenten bestehendes Gewinde auf. Die Gewindesegmente und die dazwischen befindlichen Ausnehmungen sind derart aufeinander abgestimmt, dass die beiden Gewinde beim axialen Zusammenschieben übereinandergeschoben werden, ohne dass die Gewindegänge zunächst in Eingriff gelangen. Erst durch das Verdrehen der Teile relativ zueinander, also nach dem Zusammenschieben, gelangen die Gewinde miteinander in Eingriff und können so ihre abstützende Wirkung entfalten.

Geht man davon aus, dass das Montagesystem zum Befestigen einer oben beschriebenen Luftauslassdüse in einem Wandelement dienen soll, ist es dementsprechend möglich, die beiden Teile zunächst axial zusammenzuschieben, bis sie das Wandelement auf beiden Seiten berühren. Beim nachfolgenden Verdrehen der Teile wird das Wandelement fest eingeklemmt, wobei die jetzt in Eingriff befindlichen Gewinde die erforderliche Abstützung sowie eine Selbsthemmung gewährleisten. Die Selbsthemmung verhindert ein ungewolltes Lösen der Teile durch Wiederaufdrehen in Gegenrichtung.

Vorzugsweise sind das erste und das zweite Teil in beliebiger axialer Relativstellung zueinander verdrehbar. Das bedeutet, dass das erste und das zweite Teil nur soweit zusammengeschoben werden müssen, dass wenigstens jeweils ein Gewindegang des ersten und des zweiten Gewindes miteinander in Eingriff gelangen können. Umgekehrt können die Teile auch vollständig zusammengeschoben werden, bis sie gegeneinander anschlagen. Auch dann ist ein Verdrehen möglich. Dementsprechend können die Teile dritte Teile, wie z. B. das Wandelement, mit völlig verschiedenen Dicken einspannen. Zwischen diesen genannten Extremstellungen können die Teile auch aus jeder anderen axialen Relativstellung verdreht werden.

Bei dem erfindungsgemäβen Montage system sind die tangentialen Breiten der Gewindesegmente insbesondere derart gewählt, dass beim Verdrehen des ersten und des zweiten Teils in jeder beliebigen, von der Stellung beim Zusammenschieben abweichenden Drehstellung maximal ein Gewindesegment des zweiten Gewindes nicht in Eingriff mit einem Gewindesegment des ersten Gewindes steht. Das bedeutet, dass das erste und das zweite Teil nur in genau einer relativen Drehstellung zusammengeschoben werden können. Beim nachfolgenden Verdrehen sind beliebige weitere Drehstellungen möglich, bei denen jedoch stets ausreichend viele Gewindesegmente miteinander in Eingriff stehen, um die nötige axiale Stützwirkung zu gewährleisten. Nur dann, wenn nahezu eine volle Drehung, d. h. eine 360-Grad-Drehung, vollzogen wird, wird wieder die Ausgangsstellung erreicht, in der die beiden Teile axial verschoben werden können, weil dann die Gewinde nicht mehr miteinander in Eingriff stehen. Die dazwischen vollzogene, fast 360 Grad überstreichende Drehung und der damit verbundene, durch die Gewindesteigung bzw. Gewindeteilung vorgegebene axiale Hub ermöglicht jedoch ein zuverlässiges Einklemmen des zwischen dem ersten und dem zweiten Teil angeordneten dritten Teils.

Vorzugsweise weisen die Ausnehmungen des ersten Gewindes jeweils eine tangentiale, also sich über den Umfang erstreckende Breite auf, die etwas größer ist als die tangentiale Breite der Gewindesegmente des zweiten Gewindes. Damit ist es möglich, mit etwas Spiel die Gewindesegmente des zweiten Gewindes in die Ausnehmungen des ersten Gewindes zu schieben.

Weiterhin vorteilhaft ist es, wenn die Ausnehmungen des ersten Gewindes mit unterschiedlichen tangentialen Abständen über den Umfang verteilt sind, so dass entsprechend auch die Gewindesegmente des ersten Gewindesegmentes unterschiedliche tangentiale Breiten aufweisen.

Die Ausnehmungen des zweiten Gewindes sollten analog jeweils tangentiale Breiten aufweisen, die etwas größer sind als die tangentialen Breiten der jeweils zugehörigen Gewindesegmente des ersten Gewindes. Auch dadurch wird erreicht, dass die Gewindesegmente des ersten Gewindes mit etwas Spiel in den Ausnehmungen des zweiten Gewindes verschoben werden können. Da die Gewindesegmente des ersten Gewindes jedoch unterschiedliche tangentiale Breiten aufweisen sollten, müssen dementsprechend auch die Ausnehmungen des zweiten Gewindes angepasst sein. Für jedes Gewindesegment des ersten Gewindes ist daher genau eine passende Ausnehmung im zweiten Gewinde vorgesehen.

Besonders vorteilhaft ist es, wenn die Gewindesegmente des zweiten Gewindes jeweils die gleiche tangentiale Breite aufweisen, also sich über den gleichen Winkel erstrecken.

Es hat sich herausgestellt, dass es bei einer derartigen Regelung der Breitenverhältnisse möglich ist, Ausnehmungen und Gewindesegmente mit tangentialen Breiten festzulegen, so dass das erste und das zweite Teil tatsächlich nur in genau einer relativen Drehstellung (vorzugsweise mit etwas Spiel) axial durch Verschieben trennbar sind. In allen anderen Drehstellungen über einem Winkel von nahezu 360 Grad stehen die Gewinde zuverlässig miteinander in Eingriff, so dass die Teile axial nicht auseinanderfallen können. Die in Eingriff stehenden Gewindesegmente erreichen dabei eine ausreichende axiale Tragfähigkeit, so dass die erfindungsgemäß vorgeschlagene Verbindungstechnik grundsätzlich für alle mechanisch gering belasteten Schraubverbindungen geeignet ist.

Vorzugsweise sind in dem ersten und dem zweiten Gewinde jeweils fünf axial verlaufende Ausnehmungen und entsprechend jeweils fünf Gewindesegmente ausgebildet. Es hat sich erwiesen, dass bei fünf Ausnehmungen ein optimales Verhältnis von tragenden Gewindesegmenten und nicht-tragenden Gewindesegmenten in jeder Drehstellung erreicht werden kann. Bei weniger als fünf Ausnehmungen bzw. entsprechend fünf Gewindesegmenten besteht die Gefahr einer zu geringen axialen Tragfähigkeit, was aber je nach Anwendungsfall zulässig sein mag.

Es hat sich herausgestellt, dass die tangentiale Breite der Gewindesegmente des zweiten Gewindes derart bemessen ist, dass die Gewindesegmente jeweils einen Winkel von weniger als 20 Grad, vorzugsweise von weniger als 15 Grad, nämlich insbesondere einen Winkel von 14,4 Grad überstreichen sollen.

Bei einer derartigen tangentialen Breite der Gewindesegmente des zweiten Gewindes sollten die Ausnehmungen des ersten Gewindes mit unterschiedlichen Winkeln voneinander beabstandet sein, wobei die Winkel zwischen den Ausnehmungen die ungefähren Werte 43 Grad (präzise: 43,2 Grad), 72 Grad, 100 Grad (100,8 Grad), 58 Grad (57,6 Grad) und 86 Grad (86,4 Grad) in dieser Reihenfolge betragen. Selbstverständlich sind bezüglich dieser Winkelangaben durch Fertigungstoleranzen oder gewolltes Spiel Abweichungen zulässig bzw. sinnvoll. Die jeweils gegenüberstehenden Gewindesegmente bzw. Ausnehmungen sind dann entsprechend spiegelbildlich zu dimensionieren.

Wenn das erste und das zweite Gewinde in der oben dargestellten Weise dimensioniert sind, ist es sichergestellt, dass wenigstens vier der insgesamt fünf Gewindesegmente des einen Teils in jeder Drehstellung - außer der Relativstellung zwischen erstem und zweitem Teil, bei der die Teile zusammengeschoben werden - in Eingriff mit den Gewindesegmenten des anderen Teils stehen. Wenn nur drei der fünf Gewindesegmente voll in Eingriff stehen, ist es sichergestellt, dass die restlichen beiden Gewindesegmente zumindest teilweise mit dem jeweils zugehörigen, gegenüberstehenden Gewindesegment in Eingriff sind, so dass auch bei diesen beiden Gewindesegmenten eine Gesamtüberdeckung von wenigstens 50 Prozent erreicht werden kann. Unter dem Begriff "Überdeckung" ist der Bereich eines Gewindesegments zu verstehen, der mit dem zugeordneten Gewindesegment des anderen Teils in Eingriff steht.

Selbstverständlich kann die Zuordnung der tangentialen Breiten der Ausnehmungen und Gewindesegmente auch genau umgekehrt erfolgen. Es ist dementsprechend unerheblich, ob das erste Teil oder das zweite Teil ein Gewinde mit Gewindesegmenten mit gleicher tangentialer Breite oder unterschiedlicher tangentialer Breite aufweisen. Es kommt lediglich auf die oben beschriebene geometrische Abstimmung der Gewinde und ihr Zusammenwirken an.

Weiterhin sind auch Gewindesegmente und Ausnehmungen möglich, deren Dimensionen von den oben genannten Winkelangaben abweichen.

Vorzugsweise sind das erste und das zweite Gewinde jeweils ein Sägezahngewinde. Das Sägezahngewinde hat den Vorteil, dass bei ihm keine Radialkräfte auftreten, die zu einem radialen Aufweiten der Teile und damit zu einem "Überschnappen" des Gewindes führen können. Das Sägezahngewinde unterstützt die axiale Abstützwirkung des Getriebes, ohne die Teile radial zu belasten. Die Radialkräfte können insbesondere bei dünnwandigen Kunststoffteilen mit geringer Festigkeit problematisch sein. Sofern die Teile jedoch aus Werkstoffen mit höherer Festigkeit, z. B. Metall, gefertigt sind und dementsprechend auch höhere Radialkräfte aufnehmen können, ist es möglich, die Gewinde auch mit anderen Gewindeformen auszubilden, z. B. als metrisches Gewinde.

Bei dem erfindungsgemäβe Montagesystem sind auch das erste und das zweite Gewinde als mehrgängiges Gewinde ausgeführt.

Die Mehrgängigkeit, z. B. Zwei- oder Dreigängigkeit der Gewinde bietet einen weiteren entscheidenden Vorteil. Wären die Gewinde nur eingängig, könnte es in einem unglücklichen Fall dazu kommen, dass die Dicke des dritten Teils, z. B. die Wandstärke, genau einem Wert entsprechen würde, in dem die Gewinde der beiden Teile nicht in Eingriff zueinander bringbar sind. Wollte der Monteur durch Verdrehen der Teile versuchen, die Gewinde in Eingriff zu bringen, würden die Teile sofort axial weiter zusammengeschoben, was durch die Dicke des dritten Teils nicht zugelassen würde. Es bliebe dem Monteur dann nur noch, die Teile etwas weiter auseinanderzubewegen, bis ein dahinterliegender Gewindegang greift. Dann jedoch wäre eine Verdrehung der Teile um 360 Grad erforderlich, um die angestrebte Axialstellung zu erreichen. In dieser Drehstellung jedoch, da es sich um eine Volldrehung gehandelt hätte, bei der wieder die Stellung beim Zusammenschieben erreicht wäre, würden die Gewindesegmente wieder außer Eingriff gelangen, so dass ein zuverlässiges Festklemmen nicht möglich wäre.

Das Problem wird durch das Bereitstellen eines mehrgängigen Gewindes gelöst. Bei einem zweigängigen Gewinde sind stets zwei Gewindegänge in Eingriff, deren Beginn jeweils um 180 Grad verdreht wäre. Eine Volldrehung der Teile um 360 Grad würde dadurch, dass die beiden Gewindegänge spiralförmig ineinander verdreht sind, eine axiale Verschiebung um eine doppelte Gewindeteilung bewirken. Bei dem oben geschilderten Problem, bei dem die Wandstärke exakt der Stellung entsprechen würde, in die die Teile axial zusammengeschoben werden könnten, ist es jetzt möglich, die Teile axial etwas auseinanderzuschieben und zu verdrehen. Die angestrebte Klemmstellung wird bereits bei einer 180 Grad-Drehung - bzw. auch schon vorher - erreicht, bei der die Gewindesegmente noch voll in Eingriff stehen.

Bei einer weiteren vorteilhaften Weiterentwicklung der Erfindung weisen die Gewindesegmente an einer zu einer benachbarten Ausnehmung gerichteten Stirnseite eine Fase an jedem Gewindegang auf, die eine bezüglich der Flanke des Gewindegangs abgeschrägte Fläche bildet. Die Fasen sind an den Gewindesegmenten derart angeordnet, dass nach dem Zusammenschieben der Teile und vor deren Verdrehen die Fasen der Gewindesegmente des ersten Gewindes den Fasen der Gewindesegmente des zweiten Gewindes gegenüberstehen. Dabei sind die Fasen derart ausgerichtet, dass die Fasen das erste und das zweite Teil auseinanderdrücken, wenn die sich gegenüberstehenden Fasen berühren. In der Praxis wird immer wieder das Problem auftreten, dass sich die Gewindestirnseiten der beiden Gewinde vollständig oder teilweise direkt gegenüberstehen, so dass ein Verdrehen der Teile nicht unmittelbar möglich ist. Vielmehr muss durch axiales Verschieben der Eingriff erst gesucht werden, was die Montage verkomplizieren würde. Durch die angefasten Stirnseiten werden die Teile axial etwas auseinandergedrückt, bis die Gewindestirnseiten derart versetzt voreinander stehen, dass ein Verdrehen leicht möglich ist. Der Bediener muss somit nicht lange den Eingriff suchen. Durch einfaches Verdrehen der Teile und die unterstützende Wirkung der angefasten Gewindestirnseiten gleiten die Gewinde automatisch in die geeignete Stellung, in der sie ineinander verdreht werden können.

Bei einer anderen Weiterentwicklung der Erfindung weisen die Ausnehmungen von wenigstens einem der Gewinde in einem, bezogen auf das Zusammenschieben der Teile, vorderen Bereich eine größere tangentiale Breite auf, als in einem hinteren Bereich. Unter vorderem Bereich ist somit der Bereich der Gewinde zu verstehen, der beim Zusammenschieben der Teile zuerst überdeckt wird. Dadurch, dass die Ausnehmungen wenigstens auf einem Teil, vorzugsweise aber auf beiden Teilen im vorderen Bereich ein größere tangentiale Breite aufweisen, lassen sich die Teile beim Zusammenschieben leichter "einfädeln". Der Bediener muss somit nicht lange die Stellung suchen, in der die Teile zusammenschiebbar sind. Die Ausnehmungen verjüngen sich dann nach hinten, d. h., ihre tangentiale Breite nimmt ab. Dadurch kann mit fortschreitendem Zusammenschieben der Teile die relative Drehstellung der Teile präzisiert werden. Außerdem wird sichergestellt, dass die tangentiale Erstreckung der Gewindesegmente groß genug ist, um den Festigkeitsanforderungen zu genügen.

Vorzugsweise ist das erste Gewinde ein Außengewinde und das zweite Gewinde ein Innengewinde. Selbstverständlich ist auch die genau umgekehrte Anordnung möglich, bei der das zweite Gewinde als Außengewinde und das erste Gewinde als Innengewinde ausgebildet ist.

Dadurch, dass durch das Verdrehen des ersten und des zweiten Teils das dazwischen angeordnete dritte Teil eingeklemmt werden soll, ist es vorteilhaft, wenn das erste und das zweite Teil jeweils einen Flansch aufweisen. Dabei ist es zu bevorzugen, dass die Gewindesegmente axial bis an den zu dem jeweiligen Teil gehörigen Flansch heranreichen. Dann ist es nämlich möglich, die Teile derart axial zusammenzuschieben, dass sich die Flansche berühren, wobei immer noch ein ausreichender Gewindeeingriff möglich ist. Diese Stellung kann wichtig sein, wenn das dazwischenliegende dritte Teil sehr dünn ist (Blech).

Das erfindungsgemäße Montagesystem ist für jede Art von Schraubenverbindung geeignet, sofern die Festigkeitsanforderungen erreicht werden können. Es ermöglicht ein besonders einfaches und schnelles Zusammenfügen der Teile, da - im Gegensatz zu bekannten Schraubenverbindungen - ein langwieriges, mehrfaches Verdrehen der Teile nicht erforderlich ist. Vielmehr genügt es, die Teile zusammenzuschieben und danach um maximal 360 Grad, meist jedoch weniger als 180 Grad (bei mehrgängigen Gewinden) zu verdrehen.

Bei einer besonders vorteilhaften Ausführungsform der Erfindung ist das erste Teil ein Einschraubteil und trägt z. B. eine Luftauslassdüse, während das zweite Teil ein Mutternteil ist, mit dem das Einschraubteil gekontert werden soll. An dem zweiten Teil kann zusätzlich auf dessen Innenseite eine Aufnahme für einen Luftschlauch vorgesehen sein, der zu einem Gebläse, einer Heizung oder einem Klimagerät führt.

Dabei kann es vorteilhaft sein, wenn an einem der Teile eine Befestigungseinrichtung vorgesehen ist, an der eine Einrichtung zum Einstellen eines das Teil durchdringenden Luftstroms befestigbar ist. Bei der Einrichtung zum Einstellen des Luftsstroms kann es sich z. B. um eine Blende oder eine Klappe handeln, die an dem betreffenden Teil befestigt wird, um den Luftstrom zu steuern. Bei dem betreffenden Teil kann es sich z. B. um die Luftauslassdüse handeln. Durch Bereitstellung von Blenden mit verschiedenen Querschnitten ist es möglich, unterschiedlich starke Luftströme einzustellen.

Diese und weitere Vorteile und Merkmale der Erfindung werden nachfolgend anhand eines Beispiels unter Zuhilfenahme der begleitenden Figuren näher erläutert. Es zeigen:
- **Fig. 1a**: ein erstes Teil eines erfindungsgemäßen Montagesystems in Perspektivansicht;
- **Fig. 1b**: eine Rückansicht eines ersten Teils auf dessen Gewinde;
- **Fig. 2a**: ein zweites Teil des erfindungsgemäßen Montagesystems in Perspektivansicht;
- **Fig. 2b**: eine Rückansicht des zweiten Teils; und
- **Fig. 3**: den Zusammenbau des erfindungsgemäßen Montagesystems in Schnittdarstellung.

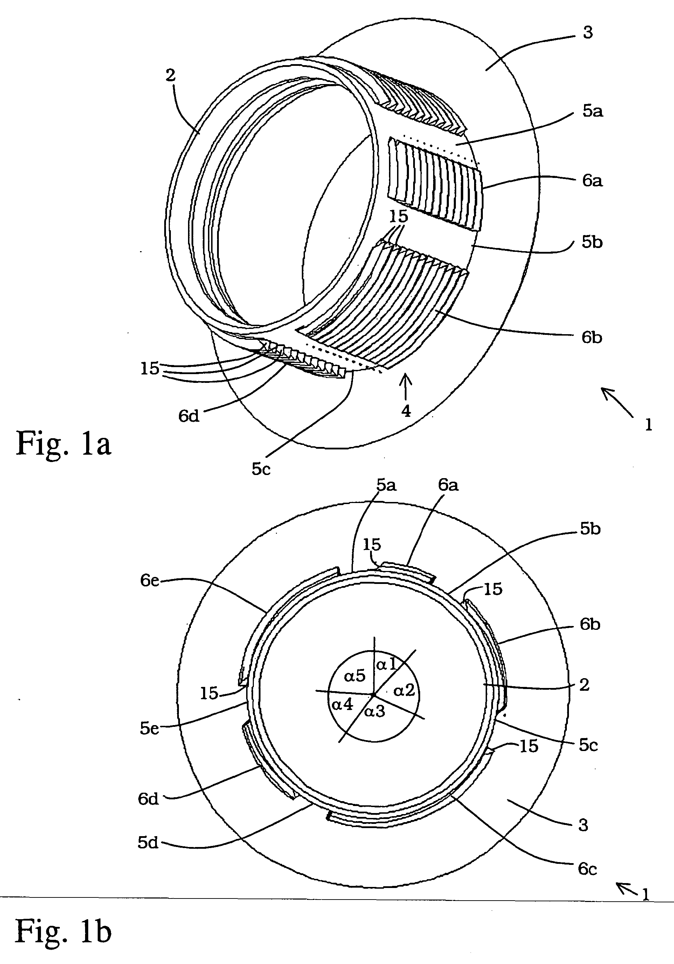

Da die Fig. 1 bis 3 im Prinzip das gleiche Montagesystem betreffen, werden sie nachfolgend gemeinsam erläutert.

Fig. 1a zeigt in Perspektivdarstellung die Rückseite eines als erstes Teil dienenden Einschraubteils 1, mit einem Schraubenschaft 2 und einem sich von dem Schraubenschaft 2 radial nach außen erstreckenden Schraubenflansch 3. Auf dem Schraubenschaft 2 ist ein als erstes Gewinde dienendes Außengewinde 4 ausgebildet, das durch mehrere (in dem gezeigten Beispiel fünf) Ausnehmungen 5a bis 5e unterbrochen ist (s. a. Fig. 1b). Dementsprechend sind zwischen den Ausnehmungen 5a bis 5e Außengewindesegmente 6a bis 6e ausgebildet.

Der Schraubenschaft 2 ist innen hohl, so dass das gesamte Einschraubteil 1 als Luftauslass bzw. Lüftungsdüse dienen kann.

Das Außengewinde 4 ist zweigängig und besteht dementsprechend aus zwei ineinander spiralförmig verschlungenen Gewindegängen.

Wie die Rückansicht in Fig. 1b zeigt, weisen die sich in Umfangsrichtung auf dem Schraubenschaft 2 erstreckenden Ausnehmungen 5a bis 5e im Wesentlichen die gleiche tangentiale Breite auf. Hierbei hat sich ein Winkel von ca. 16 Grad als geeignet erwiesen, über den sich die Ausnehmungen 5a bis 5e erstrekken.

Die Außengewindesegmente 6a bis 6e hingegen erstrecken sich jeweils über unterschiedliche Winkel. Die Anfänge der Gewindesegmente 6a bis 6e sind mit verschiedenen Winkeln voneinander am Umfang beabstandet. Unter der Maßgabe, dass der später noch zu erörternde Winkel β, über den sich die Gewindesegmente des zweiten Teils erstrecken, jeweils 14,4 Grad beträgt, ist der Beginn des Außengewindesegmentes 6b um den Winkel α₁ = 3β = 43,2 Grad festgelegt. Der Anfang des Gewindesegments 6c im Verhältnis zum Beginn des Gewindesegments 6b ist um den Winkel α₂ = 5β = 72,0 Grad verdreht. Entsprechend betragen die in Fig. 1b gezeigten Winkel α₃ = 7β = 100,8 Grad, α₄ = 4β = 57,6 Grad und α₅ = 6β = 86,4 Grad.

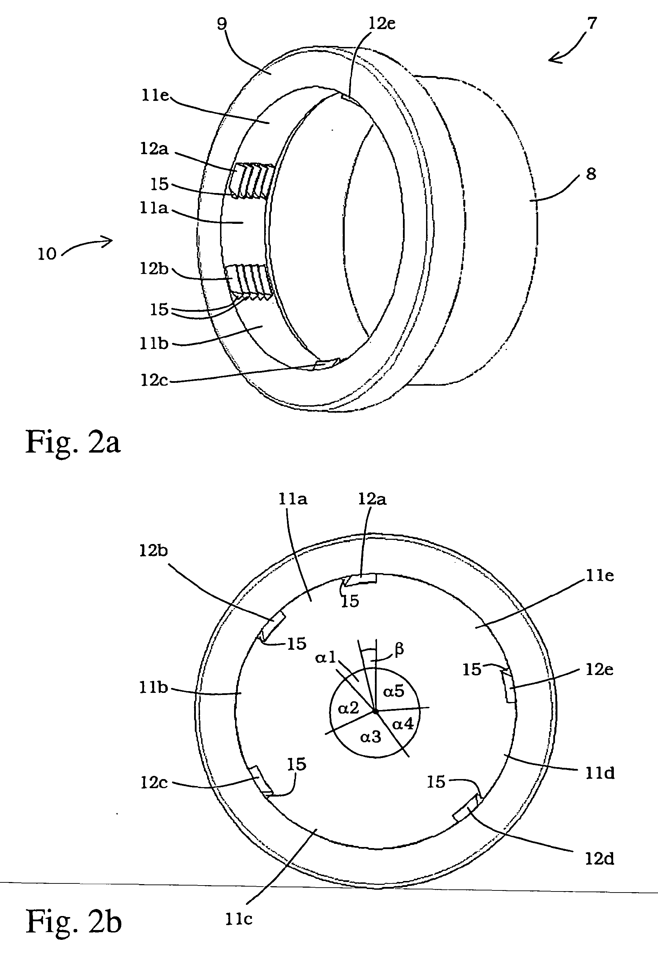

In Fig. 2a ist ein als zweites Teil dienendes Mutternteil 7 dargestellt, dass auf das Einschraubteil 1 aufgeschraubt werden kann. Das Mutternteil 7 weist einen Mutternschaft 8 und einen sich radial erstreckenden Mutternflansch 9 auf. Es ist innen hohl ausgebildet. Auf der Innenseite ist ein Innengewinde 10 vorgesehen, bei dem analog zu dem Außengewinde 4 des Einschraubteils 1 mehrere (im gezeigten Beispiel fünf) Ausnehmungen 11a bis 11e mehrere Innengewindesegmente 12a bis 12e voneinander separieren (s. a. Fig. 2b).

Die Innengewindesegmente 12a bis 12e weisen eine tangentiale Breite derart auf, dass sie in die Ausnehmungen 5a bis 5e eingeschoben werden. Dabei hat sich ein Winkel β von 14,4 Grad als Maß für die tangentiale Erstreckung am Umfang als geeignet erwiesen.

Die Ausnehmungen 11a bis 11e sind bezüglich ihrer tangentialen Erstreckung an die tangentiale Breite der Außengewindesegmente 6a bis 6e angepasst. Dementsprechend sind die Ausnehmungen 11a bis 11e tangential ebenfalls mit den Winkeln α₁ bis α₅ am Umfang versetzt zueinander angeordnet, wobei gewisse Toleranzen zulässig und auch anzustreben sind, um eine leichte Montierbarkeit der beiden Teile 1 und 7 zu erreichen.

Auch das Innengewinde 10 ist als zweigängiges Gewinde ausgeführt, so dass es mit dem Außengewinde 4 in Eingriff gelangen kann.

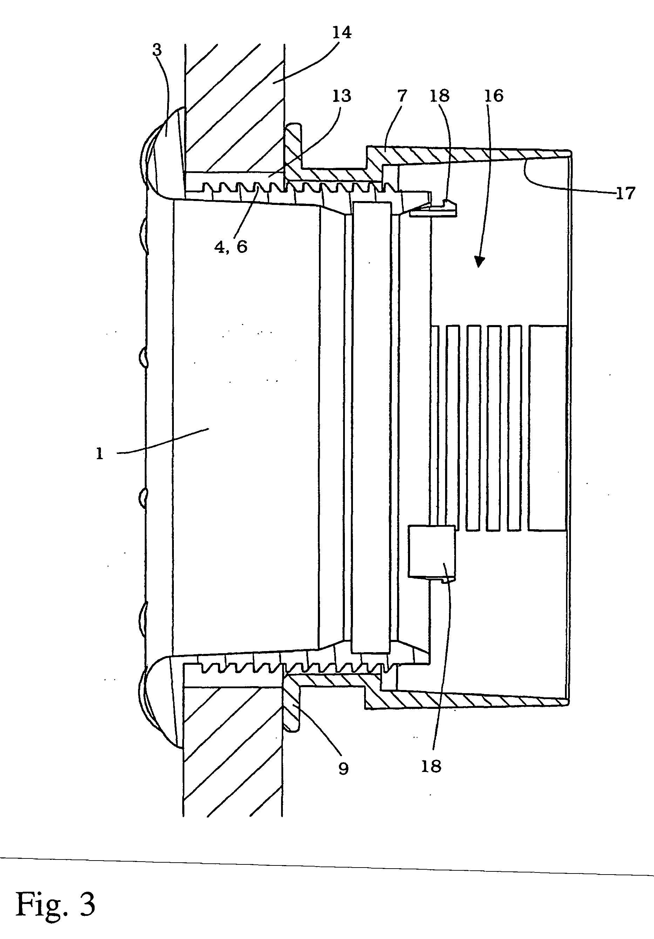

Fig. 3 zeigt das Einschraubteil 1 und das Mutternteil 7 in montiertem Zustand in Schnittdarstellung.

Zur Montage wird das Einschraubteil 1 z. B. in eine Bohrung 13 eingeführt, die in einem Wandelement 14 ausgebildet ist. Der Schraubenflansch 3 des Einschraubteils 1 ist z. B. zu dem Innern eines Raumes gerichtet, der mit Luft durch das als Belüftungsdüse dienenden Einschraubteil 1 versorgt werden soll.

Das Mutternteil 7 wird auf das Einschraubteil 1 aufgeschoben, und zwar derart, dass die Innengewindesegmente 12a bis 12e entlang der Ausnehmungen 5a bis 5e des Einschubteils 1 verschoben werden, bis der Mutternflansch 9 des Einschraubteils 7 gegen die Rückseite des Wandelements 14 anschlägt. Es ist erkennbar, dass dementsprechend auch die Außengewindesegmente 6a bis 6e in den Ausnehmungen 11a bis 11e des Mutternteils 7 axial verschoben werden. Die Ausnehmungen 5a bis 5e des Außengewindes 4 und die Innengewindesegmente 12a bis 12e des Innengewindes 10 einerseits, sowie die Ausnehmungen 11a bis 11e des Innengewindes 10 und die Außengewindesegmente 6a bis 6e des Außengewindes 4 andererseits sind hinsichtlich ihrer jeweiligen tangentialen Erstrekkung derart bemessen, dass das Mutternteil 7 leicht auf das Einschraubteil 1 axial aufgeschoben werden kann.

Bei Erreichen der Stellung, bei der der Schraubenflansch 3 und der Mutternflansch 9 leicht das Wandelement 14 von beiden Seiten berühren, verdreht der Monteur das Mutternteil 7 auf dem Einschraubteil 1. Durch das Verdrehen gelangen die Außengewindesegmente 5a bis 5e und die Innengewindesegmente 12a bis 12e miteinander bajonettartig in Eigriff. Durch das weitere Verdrehen tritt der gewünschte Gewindeeffekt ein, d. h., dass das Mutternteil 7 axial weiter in Richtung des Schraubenflansches 3 bewegt und dadurch das Wandelement 14 fest einklemmt wird.

Die Winkellagen der Gewindesegmente und Ausnehmungen sind so gewählt, dass während einer vollen 360-Grad-Drehung des Mutternteils 7 auf dem Einschraubteil 1 niemals die Gewindesegmente außer Eingriff gelangen. Es ist höchstens zulässig, dass eines der Innengewindesegemente 12a bis 12e in eine der Ausnehmungen 5a bis 5e des Außengewindes 4 gelangt. Die restlichen Innengewindesegmente 12a bis 12e bleiben während dieser Zeit jedoch voll im Eingriff.

In bestimmten Relativstellungen ist es jedoch auch möglich, dass maximal zwei Gewindesegmente nicht in vollem Eingriff mit den ihnen zugeordneten Gewindesegmenten des anderen Teils stehen. Dann ist jedoch sichergestellt, dass diese zwei Gewindesegmente zusammen eine Gesamtüberdeckung von mindestens 50 Prozent mit den Gewindesegmenten des anderen Teils erreichen. Das bedeutet, dass maximal 50 Prozent dieser beiden Gewindesegmente nicht mit den Gewindesegmenten des anderen Teils in Eingriff stehen.

Dadurch ist sichergestellt, dass während einer Volldrehung von 360 Grad minus des Bogenmaßes eines Innengewindesegmentes 12a bis 12e (z. B. 14,4 Grad) eine permanente axiale Abstützung erreicht wird.

Das Einfädeln der Gewindesegmente wird dadurch erleichtert, dass die Gewindesegmente jeweils auf einer Seite für jeden Gewindegang stirnseitig eine Fase 15 aufweisen (Fig. 1a bis 2b). Die Fasen 15 der Innengewindesegmente 12a bis 12e stehen vor den Fasen 15 der Außengewindesegmente 6a bis 6e. Beim Verdrehen gewährleisten die Schrägflächen der Fasen 15, dass das Mutternteil 7 geringfügig axial von dem Schraubenflansch 3 weggeschoben wird, bis die Gewindesegmente leicht miteinander in Eingriff gelangen.

Das Außengewinde 4 und das Innengewinde 10 sind zweigängig ausgeführt. Dementsprechend bewirkt eine volle 360-Grad-Drehung des Mutternteils 7 eine axiale Bewegung um die zweifache Gewindeteilung. Auf diese Weise kann jede beliebige axiale Relativstellung von Einschraubteil 1 und Mutternteil 7 durch das Gewinde fixiert werden. Es kann nicht das Problem auftreten, dass das Wandelement 14 eine Dicke aufweist, die genau einer axialen Relativstellung entspricht, die nur beim Zusammenschieben der Teile 1, 7, nicht jedoch beim Verdrehen der Teile 1, 7 erreicht werden kann.

Auf der Innenseite des Mutternteils 7 ist eine Verzahnung 16 ausgebildet, in die die Rillen eines nicht dargestellten Luftschlauchs einrasten können. Die Einrastbewegung wird durch einen Konus 17 auf der Innenseite des Mutternteils 7 in bekannter Weise unterstützt. Es ist somit einfach möglich, einen Luftschlauch in den Konus 17 einzuschieben, der dann durch die Verzahnung 16 festgehalten wird. Ein zusätzlicher Montageaufwand zum Fixieren des Luftschlauchs ist dann nicht erforderlich.

Am Schraubenschaft 2 sind darüber hinaus am Umfang verteilt drei Haken 18 vorgesehen, auf denen eine nicht dargestellte Blende aufgerastet werden kann. Mit Hilfe der Blende ist es möglich, die Luftmenge, die in das Innere des Raumes gelangen soll, voreinzustellen oder zu regeln.

## Patentansprüche

1. Montagesystem, mit
- einem ersten Teil (1), das ein erstes Gewinde (4) trägt;
- einem zweiten Teil (7) das ein zu dem ersten Gewinde (4) passendes zweites Gewinde (10) trägt, derart, dass das erste und das zweite Gewinde (4, 10) miteinander in Eingriff bringbar sind;
wobei
- in dem ersten Gewinde (4) und in dem zweiten Gewinde (10) mehrere, insbesondere jeweils wenigstens zwei axial verlaufende Ausnehmungen (5, 11) ausgebildet sind, die die zugehörigen Gewindegänge unterbrechen und das erste Gewinde bzw. das zweite Gewinde (10) jeweils in mehrere in Umfangsrichtung beabstandete Gewindesegmente (6, 12) unterteilen;
- die Ausnehmungen (5, 11) und die Gewindesegmente (6, 12) derart bemessen und angeordnet sind, dass das erste (1) und das zweite Teil (7) und damit das erste (4) und das zweite Gewinde (10) axial ineinander zusammenschiebbar sind, ohne dass die Gewinde in Eingriff zueinander gelangen, wobei die Gewindesegmente (6) des ersten Gewindes (4) in die Ausnehmungen (11) des zweiten Gewindes (10) und die Gewindesegmente (12) des zweiten Gewindes (10) in die Ausnehmungen (5) des ersten Gewindes (4) schiebbar sind; und wobei
- das erste und das zweite Teil (1, 7) nach dem Zusammenschieben relativ zueinander verdrehbar sind, so dass die Gewinde (4, 10) miteinander in Eingriff gelangen;
**dadurch gekennzeichnet, dass**
- die tangentialen Breiten der Gewindesegmente (6, 12) derart gewählt sind, dass beim Verdrehen des ersten und des zweiten Teils (1, 7) in jeder beliebigen, von der Stellung beim Zusammenschieben abweichenden Drehstellung maximal ein Gewindesegment (12) des zweiten Gewindes (10) nicht in Eingriff mit einem Gewindesegment (6) des ersten Gewindes (4) steht und/oder maximal zwei Gewindesegmente (12) des zweiten Gewindes (10) eine Überdeckung mit den zugeordneten Gewindesegmenten (6) des ersten Gewindes (4) von weniger als 100 Prozent, aber mehr als 50 Prozent aufweisen: und dass
- das erste und das zweite Gewinde (4, 10) jeweils ein mehrgängiges Gewinde ist.

2. Montagesystem nach Anspruch 1, **dadurch gekennzeichnet, dass** das erste und das zweite Teil (1, 7) in beliebiger axialer Relativstellung zueinander verdrehbar sind.

3. Montagesystem nach Anspruch 1 oder 2, **dadurch gekennzeichnet, dass** die Ausnehmungen (5) des ersten Gewindes (4) jeweils eine tangentiale Breite aufweisen, die etwas größer ist als die tangentiale Breite der Gewindesegmente (12) des zweiten Gewindes (10).

4. Montagesystem nach einem der Ansprüche 1 bis 3, **dadurch gekennzeichnet, dass** die Ausnehmungen (5) des ersten Gewindes (4) mit unterschiedlichen tangentialen Abständen über den Umfang verteilt sind.

5. Montagesystem nach einem der Ansprüche 1 bis 4, **dadurch gekennzeichnet, dass** die Gewindesegmente (6) des ersten Gewindes (4) unterschiedliche tangentiale Breiten aufweisen.

6. Montagesystem nach einem der Ansprüche 1 bis 5, **dadurch gekennzeichnet, dass** die Ausnehmungen (11) des zweiten Gewindes (10) jeweils tangentiale Breiten aufweisen, die etwas größer sind als die tangentialen Breiten der jeweils zugehörigen Gewindesegmente (6) des ersten Gewindes (4).

7. Montagesystem nach einem der Ansprüche 1 bis 6, **dadurch gekennzeichnet, dass** die Gewindesegmente (12) des zweiten Gewindes (10) jeweils die gleiche tangentiale Breite aufweisen.

8. Montagesystem nach einem der Ansprüche 1 bis 7, **dadurch gekennzeichnet, dass** in dem ersten und dem zweiten Gewinde (4, 10) jeweils fünf axial verlaufende Ausnehmungen (5, 11) ausgebildet sind.

9. Montagesystem nach einem der Ansprüche 1 bis 8, **dadurch gekennzeichnet, dass** die tangentiale Breite der Gewindesegmente (12) des zweiten Gewindes (10) derart bemessen ist, dass die Gewindesegmente (12) jeweils einen Winkel (β) von weniger als 20 Grad,insbesondere von weniger als 15 Grad, insbesondere einen Winkel (β) von 14,4 Grad überstreichen.

10. Montagesystem nach einem der Ansprüche 1 bis 9, **dadurch gekennzeichnet, dass** die Ausnehmungen (5) des ersten Gewindes (4) mit unterschiedlichen Winkeln (α₁ - α₅) voneinander beabstandet sind, wobei die Ausnehmungen um die Winkel (α₁ - α₅) mit den ungefähren Werten 43 Grad, 72 Grad, 100 Grad, 58 Grad und 86 Grad in dieser Reihenfolge voneinander am Umfang beabstandet sind.

11. Montagesystem nach einem der Ansprüche 1 bis 10, **dadurch gekennzeichnet, dass** das erste und das zweite Gewinde (4, 10) jeweils ein Sägezahngewinde ist.

12. Montagesystem nach einem der Ansprüche 1 bis 11, **dadurch gekennzeichnet, dass**
- die Gewindesegmente (6, 12) an einer zu einer benachbarten Ausnehmung (5, 11) gerichteten Stirnseite eine Fase (15) an jedem Gewindegang aufweisen;
- die Fasen (15) an den Gewindesegmenten (6, 12) derart angeordnet sind, dass nach dem Zusammenschieben der Teile (1, 7) und vor deren Verdrehen die Fasen (15) der Gewindesegmente (6) des ersten Gewindes (4) den Fasen (15) der Gewindesegmente (12) des zweiten Gewindes (10) gegenüberstehen; und dass
- die Fasen (15) derart ausgerichtete Schrägflächen bilden, dass die Fasen (15) das erste und das zweite Teil (1, 7) auseinander drücken, wenn die sich gegenüberstehenden Fasen (15) berühren.

13. Montagesystem nach einem der Ansprüche 1 bis 12, **dadurch gekennzeichnet, dass** die Ausnehmungen (5, 11) von wenigstens einem der Gewinde (4, 10) in einem, bezogen auf das Zusammenschieben der Teile (1, 7), vorderen Bereich eine größere tangentiale Breite aufweisen, als in einem hinteren Bereich.

14. Montagesystem nach einem der Ansprüche 1 bis 13, **dadurch gekennzeichnet, dass** das erste Gewinde (4) ein Außengewinde und das zweite Gewinde (10) ein Innengewinde ist.

15. Montagesystem nach einem der Ansprüche 1 bis 14, **dadurch gekennzeichnet, dass** durch das Verdrehen des ersten und des zweiten Teils (1, 7) ein zwischen dem ersten und dem zweiten Teil angeordnetes drittes Teil (14) einklemmbar ist.

16. Montagesystem einem der Ansprüche 1 bis 15, **dadurch gekennzeichnet, dass** das erste und das zweite Teil (1, 7) jeweils einen Flansch (3, 9) aufweisen.

17. Montagesystem nach Anspruch 16, **dadurch gekennzeichnet, dass** die Gewindesegmente (6, 12) axial bis an den zu dem jeweiligen Teil gehörigen Flansch (3, 9) heranreichen.

18. Montagesystem nach einem der Ansprüche 1 bis 17, **dadurch gekennzeichnet, dass** das erste Teil ein Einschraubteil (1) ist und dass das zweite Teil ein Mutternteil (7) ist.

19. Montagesystem nach einem der Ansprüche 1 bis 18, **dadurch gekennzeichnet, dass** das erste Teil (1) eine Luftauslassdüse bildet.

20. Montagesystem nach einem der Ansprüche 1 bis 19, **dadurch gekennzeichnet, dass** das zweite Teil (7) auf seiner Innenseite eine Aufnahme (16, 17) für einen Luftschlauch aufweist.

21. Montagesystem nach Anspruch 15, **dadurch gekennzeichnet, dass** das dritte Teil ein Wandelement (14) ist.

22. Montagesystem nach einem der Ansprüche 19 bis 21, **dadurch gekennzeichnet, dass** an einem der Teile (1, 7) eine Befestigungseinrichtung vorgesehen ist, an der eine Einrichtung zum Einstellen eines das Teil (1, 7) durchdringenden Luftstroms befestigbar ist.

## Claims

1. Installation method, comprising:
- a first part (1), having a first thread (4);
- a second part (7), having a second thread (10), which matches the first thread (4) in such a way that the first and the second thread (4, 10) can be brought together and engaged;
whereby:
- in the first thread (4) and in the second thread (10), a number of - and in particular at least two - axially orientated recesses (5, 11) are arranged, which interrupt the respective passages of the threads and which divide the first thread and the second thread (10) into a number of threaded segments (6, 12) spaced circumferentially at intervals;
- the recesses (5, 11) and the threaded segments (6, 12) are dimensioned and arranged in such a way that the first (1) and the second (7) part and thereby the first (4) and the second (10) thread can be axially inserted without the threads becoming engaged, whereby the threaded segments (6) of the first thread (4) can be inserted into the recesses (11) of the second thread (10) and the threaded segments (12) of the second thread (10) can be inserted into the recesses (5) of the first thread (4), and whereby:
- after being so inserted, the first and the second part (1, 7) can be rotated in relation to each other, so that the threads (4, 10) engage with each other;
**characterised in that**:
- the tangential widths of the threaded segments (6, 12) are chosen in such a manner that when the first and the second parts (1, 7) are rotated into any position deviating from the position of rotation for the insertion, a maximum of one threaded segment (12) of the second thread (10), is not engaged with a threaded segment (6) and/or a maximum of two threaded segments (12) of the second thread (10), an overlapping occurs of the threaded segment (6) with the first thread (4) of less than 100 percent, but more than 50 percent; and that
- the first and the second thread (4, 10) are respectively a multiple thread.

2. Installation method according to Claim 1 above, **characterised in that** the first and the second part (1, 7) can be rotated in any axial position in relation to each other.

3. Installation method according to Claim 1 or 2 above, **characterised in that** the recesses (5) of the first thread (4) have respectively a tangential width that is slightly larger than the tangential width of the threaded segment (12) of the second thread (10).

4. Installation method according to one of the above Claims 1 to 3, **characterised in that** the recesses (5) of the first thread (4) are distributed around the periphery at different tangential spacings.

5. Installation method according to one of the above Claims 1 to 4, **characterised in that** the threaded segments (6) of the first thread (4) have different tangential widths.

6. Installation method according to one of the above Claims 1 to 5, **characterised in that** the recesses (11) of the second thread (10) have in each case tangential widths that are slightly greater than the tangential widths of the respectively appropriate threaded segments (6) of the first thread (4).

7. Installation method according to one of the above Claims 1 to 6, **characterised in that** the threaded segments (12) of the second thread (10) have respectively the same tangential width.

8. Installation method according to one of the above Claims 1 to 7, **characterised in that** in each case five recesses (5, 11) that run axially are formed in the first and second threads (4, 10).

9. Installation method according to one of the above Claims 1 to 8, **characterised in that** the tangential width of the threaded segments (12) of the second thread (10) is calculated in such a way that the threaded segments (12) each cover an angle (β) of less than 20 degrees, and in particular less than 15 degrees and more particularly an angle (β) of 14.4 degrees.

10. Installation method according to one of the above Claims 1 to 9, **characterised in that** the recesses (5) of the first thread (4) are spaced at different angles (α1 - α5), whereby the recesses are spaced at the angles (α1 - α5), having the approximate values of 43, 72, 100, 58 and 86 degrees, from each other in this sequence at the periphery.

11. Installation method according to one of the above Claims 1 to 10, **characterised in that** the first and the second thread (4, 10) is respectively a buttress thread.

12. Installation method according to one of the above Claims 1 to 11, **characterised in that**:
- the threaded segments (6, 12) comprise, at one face end directed towards an adjoining recess (5, 11), a phase (15) at each threading;
- the phases (15) at the threaded segments (6, 12) are arranged in such a way that, once the parts (1, 7) have been pushed together and before these are rotated, the phases (15) of the threaded segments (6) of the first thread (4) are directly opposite the phases (15) of the threaded segments (12) of the second thread (10), and that
- the phases (15) form angled surfaces in such a way that the phases (15) press the first and second parts (1, 7) apart when the opposing phases (15) make contact with them.

13. Installation method according to one of the above Claims 1 to 12, **characterised in that** the recesses (5, 11) of at least one of the threads (4, 10) has, once the parts (1, 7) have been inserted, a greater tangential width in a front area than in a rear area.

14. Installation method according to one of the above Claims 1 to 13, **characterised in that** the first thread (4) is an outer thread and the second thread (10) is an inner thread.

15. Installation method according to one of the above Claims 1 to 14, **characterised in that**, as a result of the rotation of the first and the second part (1, 7), a third part (14) located between the first and the second part can be securely clamped.

16. Installation method according to one of the above Claims 1 to 15, **characterised in that** the first and the second parts (1, 7) both comprise a flange (3, 9).

17. Installation method according to Claim 16 above, **characterised in that** the threaded segments (6, 12) extend axially as far as the flange (3, 9) forming part of the respective part.

18. Installation method according to one of the above Claims 1 to 17, **characterised in that** the first part is in the form of a screw (1) and the second part is in the form of a nut (7).

19. Installation method according to one of the above Claims 1 to 18, **characterised in that** the first part (1) is in the form of an air outlet nozzle.

20. Installation method according to one of the above Claims 1 to 19, **characterised in that**, on its inner side, the second part (7) has a mounting (16, 17) for an air hose.

21. Installation method according to Claim 15 above, **characterised in that** the third part is in the form of a wall element (14).

22. Installation method according to one of the above Claims 19 to 21, **characterised in that** a mounting device is provided on one of the parts (1, 7), onto which a device can be mounted for the purpose of adjusting the air flow passing through one of the parts (1, 7).

## Revendications

1. Système de montage avec
- un premier élément (1) qui porte un premier filetage (4) ;
- un deuxième élément (7) qui porte un deuxième filetage (10) adapté au premier filetage (4), de telle sorte que les premier et deuxième filetages (4, 10) soient aptes à être accouplés ;
étant précisé
- qu'il est prévu dans le premier filetage (4) et dans le deuxième filetage (10) plusieurs, en particulier au moins deux creux (5, 11) qui s'étendent axialement, qui interrompent les pas de vis et qui divisent les premier et deuxième filetages (10) en plusieurs segments de filetage (6, 12) espacés dans le sens circonférentiel ;
- que les creux (5, 11) et les segments de filetage (6, 12) sont dimensionnés et disposés de telle sorte que les premier et deuxième éléments (7) et, ainsi, les premier (4) et deuxième (10) filetages soient aptes à être emboîtés axialement l'un dans l'autre sans que les filetages viennent s'accoupler, étant précisé que les segments (6) du premier filetage (4) sont être aptes à être glissés dans les creux (11) du deuxième filetage (10) tandis que les segments (12) du deuxième filetage (10) sont aptes à être glissés dans les creux (5) du deuxième filetage (4) ; et que
- les premier et deuxième éléments (1, 7), une fois emboîtés, sont aptes à tourner l'un par rapport à l'autre, de sorte que les filetages (4, 10) viennent s'accoupler,
**caractérisé en ce que**
- les largeurs tangentielles des segments de filetage (6, 12) sont choisies de telle sorte que lors de la rotation des premier et deuxième éléments (1, 7) dans n'importe quelle position de rotation différente de la position d'emboîtement au maximum un segment (12) du deuxième filetage (10) ne soit pas accouplé à un segment (6) du premier filetage (4) et/ou au maximum deux segments (12) du deuxième filetage (10) présentent un recouvrement (12) du deuxième filetage (10) présentent un recouvrement avec les segments associés (6) du premier filetage (4) de moins de 100 pour cent, mais de plus de 50 pour cent ; et **en ce que**
- les premier et deuxième filetages (4, 10) sont constitués chacun par un filetage multiple.

2. Système de montage selon la revendication 1, **caractérisé en ce que** les premier et deuxième éléments (1, 7) sont aptes à tourner l'un par rapport à l'autre dans n'importe quelle position relative axiale.

3. Système de montage selon la revendication 1 ou 2, **caractérisé en ce que** les creux (5) du premier filetage (4) présentent chacun une largeur tangentielle qui est un peu plus grande que la largeur tangentielle des segments (12) du deuxième filetage (10).

4. Système de montage selon l'une des revendications 1 à 3, **caractérisé en ce que** les creux (5) du premier filetage (4) sont répartis sur la circonférence avec des écartements tangentiels différents.

5. Système de montage selon l'une des revendications 1 à 4, **caractérisé en ce que** les segments (6) du premier filetage (4) présentent des largeurs tangentielles différentes.

6. Système de montage selon l'une des revendications 1 à 5, **caractérisé en ce que** les creux (11) du deuxième filetage (10) présentent des largeurs tangentielles qui sont un peu plus grandes que les largeurs tangentielles des segments correspondants (6) du premier filetage (4).

7. Système de montage selon l'une des revendications 1 à 6, **caractérisé en ce que** les segments (12) du deuxième filetage (10) présentent la même largeur tangentielle.

8. Système de montage selon l'une des revendications 1 à 7, **caractérisé en ce que** cinq creux (5, 11) s'étendant axialement sont formés respectivement dans les premier et deuxième filetage (4, 10).

9. Système de montage selon l'une des revendications 1 à 8, **caractérisé en ce que** la largeur tangentielle des segments (12) du deuxième filetage (10) est dimensionnée de telle sorte que les segments (12) couvrent chacun un angle (β) de moins de 20 degrés, en particulier de moins de 15 degrés, en particulier un angle (β) de 14,4 degrés.

10. Système de montage selon l'une des revendications 1 à 9, **caractérisé en ce que** les creux (5) du premier filetage (4) sont espacés les uns des autres avec des angles (α1-α₅) différents, étant précisé que les creux sont espacés les uns des autres sur la circonférence suivant les angles (α₁-α₅) présentant les valeurs approximatives de 43 degrés, 72 degrés, 100 degrés, 58 degrés et 86 degrés, dans cet ordre.

11. Système de montage selon l'une des revendications 1 à 10, **caractérisé en ce que** les premier et deuxième filetages (4, 10) sont constitués chacun par un filetage en dents de scie.

12. Système de montage selon l'une des revendications 1 à 11, **caractérisé en ce que**
- les segments de filetage (6, 12) présentent, sur une face frontale dirigée vers un creux (5, 11) voisin, un biseau (15) sur chaque pas ;
- les biseaux (15) prévus sur les segments de filetage (6, 12) sont disposés de telle sorte qu'après l'emboîtement des éléments (1, 7) et avant leur rotation, les biseaux (15) des segments (6) du premier filetage (4) se trouvent en face des biseaux (15) des segments (12) du deuxième filetage (10) ; et **en ce que**
- les biseaux (15) forment des surfaces inclinées qui sont orientées de telle sorte que les biseaux (15) repoussent les premier et deuxième éléments (1, 7) l'un par rapport à l'autre quand les biseaux (15) qui se font face se touchent.

13. Système de montage selon l'une des revendications 1 à 12, **caractérisé en ce que** les creux (5, 11) de l'un au moins des filetages (4, 10) présentent une largeur tangentielle plus grande dans une zone avant, par rapport à l'emboîtement des éléments (1, 7), que dans une zone arrière.

14. Système de montage selon l'une des revendications 1 à 13, **caractérisé en ce que** le premier filetage (4) est constitué par un filetage extérieur, et le deuxième filetage (10) par un filetage intérieur.

15. Système de montage selon l'une des revendications 1 à 14, **caractérisé en ce que** grâce à la rotation des premier et deuxième éléments (1, 7), un troisième élément (14) est apte à être serré entre les premier et deuxième éléments.

16. Système de montage selon l'une des revendications 1 à 15, **caractérisé en ce que** les premier et deuxième éléments (1, 7) présentent chacun une collerette (3, 9).

17. Système de montage selon la revendication 16, **caractérisé en ce que** les segments de filetage (6, 12) s'étendent axialement jusqu'à la collerette (3, 9) appartenant à l'élément respectif.

18. Système de montage selon l'une des revendications 1 à 17, **caractérisé en ce que** le premier élément est constitué par un élément de vissage (1) et **en ce que** le deuxième élément est constitué par un élément formant écrou (7).

19. Système de montage selon l'une des revendications 1 à 18, **caractérisé en ce que** le premier élément forme un éjecteur d'air.

20. Système de montage selon l'une des revendications 1 à 19, **caractérisé en ce que** le deuxième élément (7) présente sur son côté intérieur un logement (16, 17) pour un tuyau d'air.

21. Système de montage selon la revendication 15, **caractérisé en ce que** le troisième élément est constitué par un élément de paroi (14).

22. Système de montage selon l'une des revendications 19 à 21, **caractérisé en ce qu'**il est prévu sur l'un des éléments (1, 7) un dispositif de fixation auquel est apte à être fixé un dispositif pour régler un écoulement d'air qui traverse ledit élément (1, 7).
